(19) **Europäisches Patentamt**
**European Patent Office**
**Office européen des brevets**

(11) **EP 1 488 207 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(51) Int Cl.:
*G01M 3/38* (2006.01)   *G06T 5/00* (2006.01)
*G06T 7/00* (2006.01)   *F16L 101/30* (2006.01)

(21) Anmeldenummer: **03745244.8**

(86) Internationale Anmeldenummer:
**PCT/DE2003/000195**

(22) Anmeldetag: **24.01.2003**

(87) Internationale Veröffentlichungsnummer:
**WO 2003/083430 (09.10.2003 Gazette 2003/41)**

(54) **VERFAHREN ZUM INSPIZIEREN VON KANALROHREN MIT EINER FISHEYE-LINSE**

METHOD FOR INSPECTING CHANNEL PIPES

PROCEDE D'INSPECTION DE CANALISATIONS

(84) Benannte Vertragsstaaten:
**DE FR GB**

(30) Priorität: **28.03.2002 DE 10213931**

(43) Veröffentlichungstag der Anmeldung:
**22.12.2004 Patentblatt 2004/52**

(73) Patentinhaber: **IBAK HELMUT HUNGER GmbH & CO. KG**
**24148 Kiel (DE)**

(72) Erfinder: **REHSE, Heino**
**24146 Kiel (DE)**

(74) Vertreter: **Tönnies, Jan G.**
**Boehmert & Boehmert**
**Anwaltspartnerschaft mbB**
**Patentanwälte Rechtsanwälte**
**Niemannsweg 133**
**24105 Kiel (DE)**

(56) Entgegenhaltungen:
**EP-A- 0 971 540      EP-A- 1 022 553**
**US-A- 5 313 306      US-A- 5 870 135**
**US-A1- 2001 015 751      US-B1- 6 346 967**

**Beschreibung**

Die Erfindung betrifft ein Verfahren zum Inspizieren von Rohren wie Abwasserrohren, Pipelines und dgl.

Aus der EP 1022553 B1 ist ein in einem Kanalrohr verfahrbarer Kamerawagen bekannt, der zur Erzeugung vollsphärischer Bilder an definierten Streckenabschnitten längs der Rohrachse (z.B. alle 5cm) mit Weitwinkelobjektiven, insbesondere auch Fisheye-Objektiven, eingerichtet ist. Die digitalen Bildsignale werden gespeichert und können zu einem späteren Zeitpunkt optisch ausgewertet werden. Aus der US 5,185,667 ist ein Verfahren zur Erzeugung perspektivischer Abbildungen mit Schwenk-, Neige-, Dreh- und Vergrößerungsfunktionen aus mit einem Fisheye-Objektiv gefertigten digitalen Bildern bekannt, das ein Betrachten der an dem Aufnahmepunkt aufgenommen Bilder in verschiedenen Richtungen, aber nur von diesem Punkt aus, ermöglicht.

Bei einer Anwendung dieses Verfahrens zum Wiedergeben von Aufnahmen von einzelnen Bildern an verschiedenen Orten in dem Kanalrohr kann durch ein geeignetes Verrechnen der gewonnen Bildsignale jeder Ort der Rohrwandung betrachtet werden, aber nur von den diskreten Orten, an denen die Aufnahmen gefertigt worden sind. Wenn die Fahrt des Kamerawagens durch das Kanalrohr nachvollzogen wird, so springt das Bild von Aufnahmeort zu Aufnahmeort. Es ist aber erwünscht, bei dem nachträglichen virtuellen Durchfahren des Kanals den Eindruck eines tatsächlichen Durchfahrens zu erzeugen, also Bilder von Orten aus wiederzugeben, an denen tatsächlich gar keine Aufnahme gefertigt worden ist.

Der Erfindung liegt die Aufgabe zugrunde, anhand diskreter, an definierten Streckenabschnitten des Rohre aufgenommener hemisphärischer oder vollsphärischer Bilder eine kontinuierliche axiale Kanalinspektionsbefahrung zu simulieren, also an beliebigen (außerhalb der optischen Zentren der Bildaufnahmen liegenden) Orten perspektivische Bilder zu erzeugen.

Erfindungsgemäß wird diese Aufgabe durch die Merkmale des Hauptanspruchs gelöst, die Unteransprüche geben vorteilhafte Ausgestaltungen der Erfindung an.

Die Erfindung nutzt den Umstand, dass bei Rohrsystemen deren Geometrie (Maße und Profil) und der Ort der Kamera innerhalb des Rohres jedenfalls näherungsweise bekannt sind. Dies macht es möglich, aus diskreten Bildern an definierten Streckenabschnitten (z.b. alle 5cm) kontinuierliche Ansichten längs der Rohrachse zu errechnen, die zwischen den eigentlichen Originalaufnahmen liegen.

Hierzu werden die Bilddaten der hemisphärischen oder vollsphärischen Bilder (eine bzw. zwei Fisheyeaufnahmen) ausgehend von dem Ort der Kamera in dem Rohr rechnerisch auf die Innenfläche der bekannten Rohrgeometrie projiziert, wobei mathematisch ein unendlich langes dreidimensionales Rohrmodell verwendet wird. Zu jedem Bildpunkt des 2D-Fisheye-Bildes $P(Xf,Yf)$ mit bekannter Abbildungsfunktion (z.b. F-Theta-Objektiv) errechnen sich die Einfallswinkel ($\alpha,\theta$ der Kugelkoordinaten) und daraus ein korrespondierender Bildpunkt im 3D-Raum $P'(Xr,Yr,Zr)$ auf der Rohrinnenfläche. Für jeden Ort der Originalaufnahmen kann im Speicher des Rechners eine solche 3D-Szene aufgebaut werden. Mit bekannten Techniken der 3D-Grafikvisualisierung kann nun eine zweidimensionale perspektivische Ansicht erzeugt werden. Neben Schwenk-, Neige-, Dreh- und Vergrößerungsfunktionen erlaubt dies auch eine Translation (also die Simulation einer axialen Bewegung durch das Rohr an andere Orte als denen der Originalaufnahmen).

Befindet sich die fiktive Kamera nun im Bereich einer nächsten Originalaufnahme, wird mit dieser Aufnahme eine neue 3D-Szene aufgebaut. Der Gültigkeitsbereich einer Szene entspricht also dem Abstand der diskreten Originalaufnahmezentren.

Um die zu berechnende Datenmenge (Anzahl der Bildpunkte) zu reduzieren, kann man auch in der aktuellen Szene aus der gewünschten fiktiven Kameraposition und deren Blickwinkel im Raum lediglich die Bildpunkt berechnen, die sich in dem gewünschten Ausschnitt (Region of Interest) der Bildebene B (der fiktiven Kamera) befinden. Aus den Bildpunktkoordinaten der Bildebene B errechnet man mit Hilfe eines Projektionszentrums zuerst die korrespondierenden Bildpunktkoordinaten auf der Innenfläche der bekannten Rohrgeometrie und daraus die korrespondierenden Bildpunktkoordinaten in der Fisheyeaufnahme und erhält somit den Farb- und Helligkeitswert des Bildpunktes auf der Bildebene B mit $P''(Xb, Yb) = P(Xf, Yf)$. Die hier für notwendige Mathematik ist dem Fachmann bekannt (Trigonometrie und Geometrie des Raumes).

Der Erfindung liegt damit - bildhaft gesprochen - die Idee zugrunde, die von dem Fisheye-Objektiv erfassten Bilder ausgehend von dem Aufnahmeort auf die Innenfläche eines imaginären Rohres zu projizieren und dieses nach Umrechnung von einem beliebigen, fortschreitenden Ort in zentralperspektivischen Bilder zu betrachten.

Die Zeichnung dient zum besseren Verständnis der Erfindung. Dabei zeigt:

Fig. 1    eine schematische Darstellung der Errechnung der Zwischenbilder,

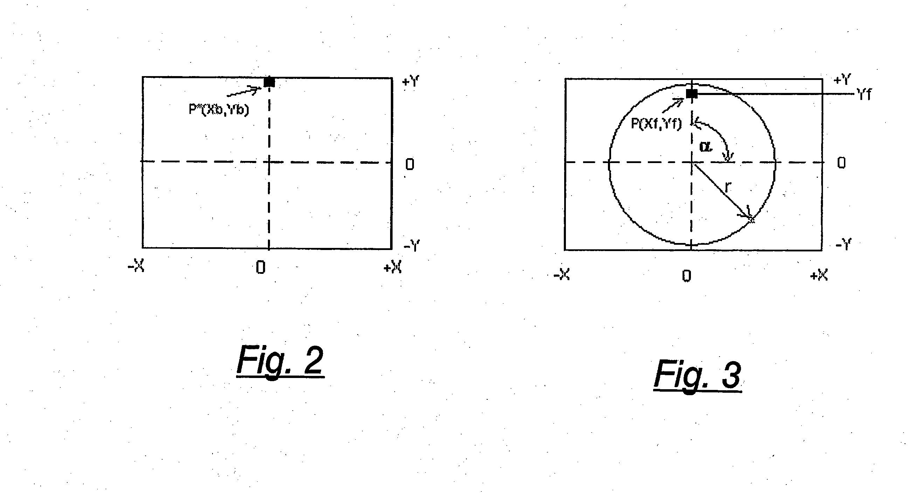

Fig. 2    die Bildebene der fiktiven Kamera und

Fig. 3    das Fisheyebild.

Die folgenden Daten sind in der Recheneinheit (Rechenprogramm) vorgegeben bzw. vorzugeben:

♦ Das Rohrprofil und deren Maße (z.B. Kreis- mit DN, oder Eiprofil mit Abmessungen) Position der Fisheyes und Winkel ihrer optischen Achsen im Rohr,

♦ Brennweite des Fisheyes und deren Abbildungsfunktion (F-Theta-Verzeichnung), Position, Brennweite, Schwenk-, Neige- und Drehwinkel der fiktiven Kamera.

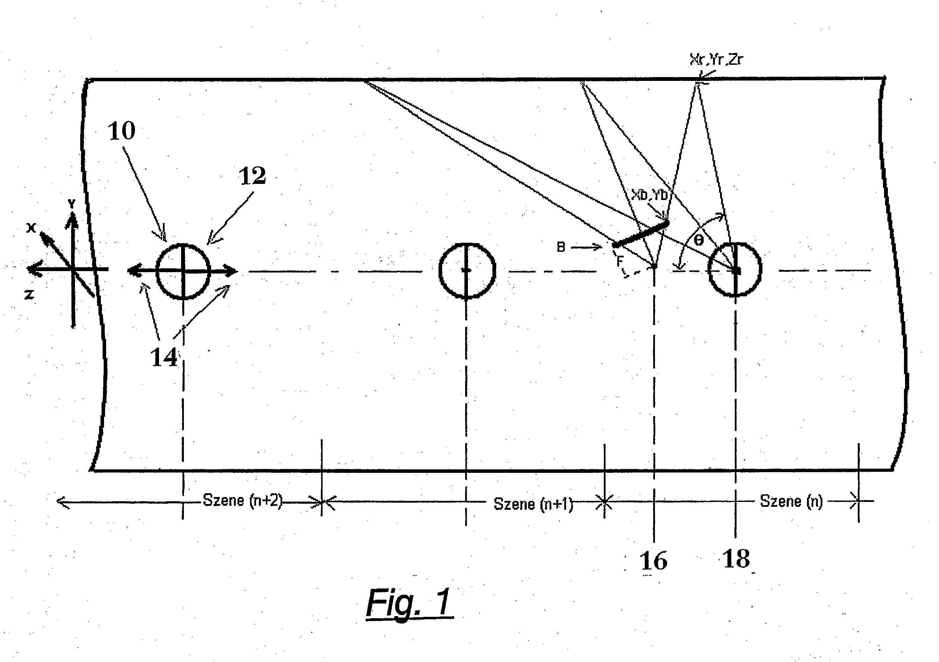

In Fig. 1 sind zur Vereinfachung nur Strahlen und Koordinaten auf der Y-Z-Ebene beschrieben. Die Bildebene B der fiktiven Kamera ist nach oben geneigt (nicht gedreht und nicht verschwenkt). Die optischen Achsen **14** der Fisheye-Objektive **10, 12** entsprechen der Rohrachse.

B = Bildebene der fiktiven Kamera

F = Brennweite der fiktiven Kamera (Abstand der Bildebene B (Projektionsebene) zum optisches Zentrum der fiktiven Kamera (Projektionszentrum)

$\alpha$, $\theta$ = Einfallswinkel ins Fisheye, wobei $\theta$ der Winkel zur Z-Achse und $\alpha$ der Winkel, den die Projektion des Strahls auf die X,Y-Ebene mit der X-Achse bildet, ist.

(Xb,Yb) = Bildpunktkoordinaten auf der Bildebene B

(Xr,Yr,Zr) = Bildpunktkoordinaten auf der Rohrwand

Es gilt P" (Xb, Yb) = P (Xf, Yf).

Die Bildpunktkoordinaten (Xf,Yf) im F-Theta-Fisheyebild errechnet sich aus den Einfallswinkel $\theta$ und $\alpha$ mit:

$$Yf = \sin(\alpha) * Ff * \theta \quad \text{und} \quad Xf = \cos(\alpha) * Ff * \theta,$$

wobei Ff = Brennweite des Fisheye-Obektivs ist.

In Fig. 1 gilt:

$$\alpha = Pi/2 \quad \rightarrow \quad Xf = 0 \text{ und } Yf = Ff * \theta.$$

In Fig. 1 wird angenommen, dass an bestimmten Orten **18** innerhalb des zu inspizierenden Rohres von einem Fisheye-Objektiv **10** nach vorne weisende und von einem anderen Fisheye-Objektiv **12** nach hinten weisende Aufnahmen gefertigt werden. Von einer fiktiven Kameraposition **16** aus, die zwischen den **Orten 18,** an denen Originalaufnahmen gefertigt wurden, werden Szenen erfasst, die von den Orten **18,** an denen Originalaufnahmen gefertigt wurden, ausgehend aufgebaut werden.

**Patentansprüche**

1. Verfahren zum Inspizieren von Kanalrohren, bei dem mit einer mit einer Fisheye-Linse versehenen Kamera an bestimmten Orten **(18)** im Rohr aufgenommene, hemi- oder vollsphärische digitale Bilder unter Erzeugen von ein virtuelles Verschwenken erlaubenden, perspektivischen Bilder verrechnet werden, **dadurch gekennzeichnet, dass** bei bekannter Geometrie des abgebildeten Rohrs aus den an einem Ort **(18)** genommen Bilddaten die sich für an einem beliebigen benachbarten Ort **(16)** (der gewünschten fiktiven Kameraposition) ergebende Zwischenbilder errechnet und dargestellt werden, indem die aufgenommenen Bilder rechnerisch auf die bekannte Rohrgeometrie projiziert und die sich daraus für den benachbarten Ort ergebenden perspektivischen Bilddaten errechnet werden.

2. Verfahren nach Anspruch 1, **dadurch gekennzeichnet, dass** zu jedem Bildpunkt des 2D-Fisheye-Bildes P' (Xf, Yf) mit bekannter Abbildungsfunktion die Einfallswinkel $(\alpha, \theta)$ der Kugelkoordinaten und daraus ein korrespondierender Bildpunkt im 3D-Raum P (Xr, Yr; Zr) auf der Rohroberfläche errechnet wird.

3. Verfahren nach Anspruch 1, **dadurch gekennzeichnet, dass** aus der gewünschten fiktiven Kameraposition **(16)** und deren Blickwinkel im Raum die Bildpunkte, die sich in dem gewünschten Ausschnitt der Bildebene befinden, errechnet werden, indem aus dem Bildpunktkoordinaten (Xb, Yb) der Bildebene B unter Annahme eines im Abstand F von der Bildebene B liegenden Projektionszentrums die korrespondierenden Bildpunktkoordinaten (Xr, Yr, Zr) auf der Innenfläche der bekannten Rohrgeometrie und die korrespondierenden Bildpunktkoordinaten (Xf, Yf) des Fisheye-Bildes errechnet werden und so der Farb- und Helligkeitswert des Bildpunktes auf der Bildebene B mit P" (Xb, Yb) = P (Xf, Yf) gewonnen wird.

## Claims

1. A method for inspecting drain pipes, where, using a camera equipped with a fisheye lens, hemi or full spherical digital pictures produced at certain areas (18) in the pipe are processed while generating perspective images that allow virtual swiveling, **characterized in that**
   in the case of a known geometry of the imaged pipe from the image data taken at an area (18) there can be calculated and represented intermediate images resulting at any neighbouring area (16) (the desired fictitious camera position), **in that** the images taken are projected by calculating onto the known pipe geometry and the perspective image data resulting therefrom for the neighbouring area are calculated.

2. The method according to Claim 1, **characterized in that** for each image point of the 2D fisheye image P' (Xf, Yf) having a known imaging function the angles of incidence ($\alpha$, $\theta$) of the spherical coordinates and from these a corresponding image point in the 3D space (Xr, Yr; Zr) are calculated on the pipe surface.

3. The method according Claim 1, **characterized in that** from the desired fictitious camera position (16) and its viewing angle in space the image points located in the desired section of the image plane are calculated **in that**, from the image point coordinates (Xb, Yb) of the image plane B, assuming a projection centre lying at a distance F from the image plane B, the corresponding image point coordinates (Xr, Yr, Zr) on the inner surface of the known pipe geometry and the corresponding image point coordinates (Xf, Yf) of the fisheye image are calculated and thus the colour and brightness value of the image point on the image plane B are obtained with P" (Xb, Yb) = P (Xf, Yf).

## Revendications

1. Procédé d'inspection des canalisations consistant en ce que des image numériques hémisphériques ou sphériques enregistrées au moyen d'une caméra dotée d'une lentille Fisheye, dans des endroits précis (18) des tuyaux, par la création d'images en perspective grâce à une inclinaison virtuelle, **caractérisé en ce que**
   si la géométrie du tuyau représenté est connue, les images intermédiaires résultant, à n'importe quel endroit proche (16) (de la position fictive souhaitée de la caméra), des données photos prises à un endroit (18), sont prises en compte et représentées grâce au fait que les photos prises sont projetées par calcul sur la géométrie connue du tuyau et que les données photos en perspective qui en résultent pour l'endroit avoisinant sont calculées.

2. Procédé selon la revendication 1, **caractérisé en ce que** les angles d'incidence ($\alpha$, 0) des coordonnées des billes sont calculés pour chaque pixel de l'image P' Fisheye en 2 D au moyen de la fonction de mappage connue et qu'un pixel correspondant est calculé dans un espace P en 3 D (Xr, Yr, Zr) sur la surface du tuyau.

3. Procédé selon la revendication 1, **caractérisé en ce que** la position fictive souhaitée de la caméra (16) ainsi que son angle de vue dans l'espace permettent de calculer les pixels se trouvant dans la découpure du plan de l'image en calculant les coordonnées (Xr, Yr, Zr) correspondantes des pixels sur la surface intérieure de la géométrie connue du tuyau et les coordonnées des pixels correspondantes (Xf, Yf) de l'image Fisheye sur la base des coordonnées (Xb, Yb) des pixels du plan d'image B en supposant un centre de projection se trouvant à l'écart F du plan d'image B, permettant ainsi d'obtenir grâce à P" (Xb, Yb) = P (Xf, Yf), sur le plan d'image B, la valeur de couleur et la valeur de luminosité.

Fig. 1

*Fig. 3*

*Fig. 2*

6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1022553 B1

- US 5185667 A